Europäisches Patentamt

(19) European Patent Office

Office européen des brevets

(11) Numéro de publication: **0 091 344**
**B1**

# (12) FASCICULE DE BREVET EUROPEEN

(45) Date de publication du fascicule du brevet:
27.11.85

(21) Numéro de dépôt: 83400609.0

(22) Date de dépôt: 23.03.83

(51) Int. Cl.⁴: **C 03 B 5/23,** F 23 M 5/02,
F 27 D 1/00

(54) **Fours à brûleurs transversaux à récupérateur.**

(30) Priorité: 02.04.82 FR 8205723

(43) Date de publication de la demande:
12.10.83 Bulletin 83/41

(45) Mention de la délivrance du brevet:
27.11.85 Bulletin 85/48

(84) Etats contractants désignés:
BE CH DE FR GB IT LI LU NL SE

(56) Documents cités:
DE - C - 550 441
US - A - 1 941 410
US - A - 4 333 406

(73) Titulaire: **SOCIETE EUROPEENNE DES PRODUITS
REFRACTAIRES, Les Miroirs 18, Avenue d'Alsace,
F-92400 Courbevoie (FR)**

(72) Inventeur: **Blanchet, Pierre, 4, Avenue du Square
Coubertin, F-92100 Boulogne (FR)**
Inventeur: **Recasens, Joseph, 24, Rue Saint-Hubert,
F-84700 Sorgues (FR)**

(74) Mandataire: **de Boisse, Louis, 37, Avenue Franklin D.
Roosevelt, F-75008 Paris (FR)**

## Description

L'invention concerne des perfectionnements à la construction de fours à brûleurs transversaux à récupérateur.

On connaît bien, en verrerie, les fours à brûleurs transversaux à récupérateur. Dans ce type de fours, les brûleurs sont disposés face à face sur les côtés du four et fonctionnent en même temps et de façon continue. Ces brûleurs sont constitués par des coquilles métalliques fixées sur des ouvreaux réfractaires eux-mêmes logés dans le piédroit du four. Les flammes sont des flammes de diffusion du type axial, le combustible arrivant par un injecteur au milieu de la veine d'air. L'air de combustion qui a été préchauffé par un récupérateur arrive dans chaque coquille et se distribue autour de cet injecteur ou «perche» par lequel arrive le combustible (gaz ou fuel). La forme de l'ouverture intérieure des ouvreaux réfractaires est habituellement tronconique pour permettre un bon accrochage de la flamme. Le récupérateur lui-même, constitué de conduits habituellement métalliques où circule l'air à réchauffer, est placé en bout de conduit d'évacuation des fumées à une extrémité du four.

Les fours à brûleurs transversaux à récupérateur, bien que consommant davantage d'énergie que les fours à régénérateurs, sont utilisés pour la fabrication de verres spéciaux dont les vapeurs sont trop corrosives pour qu'on puisse utiliser des fours à régénérateurs. Les régénérateurs sont, en effet, constitués de matériaux réfractaires qui résistent mal à cette action corrosive.

Les fours à récupérateur actuellement connus présentent divers inconvénients:

— faible couverture de flamme, surtout en racine. Or l'échange thermique et donc le rendement de combustion et, par là, la consommation du four dépendent du pourcentage de couverture de flamme;

— vitesses d'air élevées (40 à 100 m/s le plus souvent). Ces vitesses d'air imputables à la section forcément faible des ouvreaux induisent des courants de recirculation importants qui, eux-mêmes, nuisent à la bonne tenue des réfractaires de superstructure (érosion mécanique, envols...);

— surface de piédroit calorifugeable relativement faible en raison de la place importante prise par les coquilles métalliques.

La présente invention a pour objet des perfectionnements à la construction de fours à brûleurs transversaux à récupérateur, visant à remédier ou à minimiser ces inconvénients.

Plus particulièrement, l'invention concerne un four à brûleurs transversaux à récupérateur, comportant deux rangées d'ouvreaux de brûleurs (A) caractérisé en ce que chaque ouvreau a une ouverture intérieure de forme générale rectangulaire allongée, présentant une première portion de section transversale rectangulaire constante s'étendant à partir de la face postérieure de l'ouvreau, et une deuxième portion dont la face supérieure va en s'évasant vers le haut et la face inférieure va en s'évasant vers le bas jusqu'à la face antérieure de l'ouvreau, cette deuxième portion présentant un angle d'évasement au plus égal à 15°, et en ce que la longueur totale cumulée des ouvertures d'une rangée représente au moins 0,65 fois, de préférence 0,70 fois, la longueur de cette rangée.

Selon un mode de réalisation particulier, chaque ouvreau est formé de deux demi-pièces identiques en matière réfractaire, l'une constituant la lèvre inférieure et l'autre la lèvre supérieure et séparées par un joint horizontal.

De préférence, l'ouverture présente une section transversale rectangulaire allongée telle que le rapport longueur/hauteur de cette ouverture au niveau de la face antérieure soit égal à au moins 2,5, de préférence au moins 3.

L'angle d'évasement ne doit pas dépasser 15°, car au-delà il n'y a plus de possibilité d'accrochage de la flamme aux parois de l'ouverture intérieure. De préférence, l'angle d'évasement est d'environ 10°.

Généralement, la première partie de l'ouverture s'étend sur une distance n'excédant pas 0,2 fois, de préférence 0,1 fois, la profondeur totale de l'ouvreau.

Comme matériaux réfractaires convenant à la réalisation des ouvreaux de l'invention, on peut citer des réfractaires fondus et coulés à base d'alumine ou d'alumine zircone et silice, ou d'alumine zircone silice et oxyde de chrome. Des matériaux de ce genre sont commercialisés par la Demanderesse sous les désignations E.R. 1681 (produit à base de $Al_2O_3$-$ZrO_2$-$SiO_2$), E.R. 5312 (produit à base d'alumine) ou E.R. 2161 (produit à base de $Al_2O_3$-$ZrO_2$-$SiO_2$-$Cr_2O_3$).

Les conduits ou coquilles métalliques des blocs d'arrivée d'air et d'injection de combustible peuvent être branchés directement sur les faces postérieures des ouvreaux. Toutefois, selon le type de verre à traiter et les conditions opératoires utilisées, il peut se faire que les faces postérieures des ouvreaux soient portées à des températures trop élevées. Dans ce cas, un raccordement direct est à éviter et il est prévu, selon l'invention, de disposer entre les ouvreaux et lesdits conduits ou coquilles un bloc intermédiaire. Ce bloc, qui peut notamment être réalisé par mise en forme et cuisson d'une composition non façonnée réfractaire, est pourvu de canaux internes raccordables, respectivement, aux conduits d'arrivée d'air et d'injection de combustible et confluant en un canal raccordable à l'ouverture débouchant sur la face postérieure de l'ouvreau.

Selon un mode de réalisation préféré, le bloc intermédiaire est pourvu d'une chemise métallique sur une partie au moins de ses faces supérieure, latérales et inférieure.

Dans le cas de blocs réalisés par mise en forme d'une composition non façonnée, les matériaux préférés pour la fabrication de ces blocs intermédiaires sont des compositions frittables décrites dans la demande de brevet européen 0021936, notamment celles dites «pour joints de plus de 25 mm» et en particulier la composition C du Tableau 2. D'autres compositions pourraient, bien sûr, être utilisées aussi.

Le four de l'invention présente plusieurs avantages vis-à-vis d'un four classique:

— accroissement de la couverture de flamme, surtout en racine, du fait que la longueur totale cumulée des ouvertures rectangulaires des ouvreaux représente au moins 0,65 fois la distance entre les ouvreaux extrêmes;

— diminution de la vitesse d'air à l'entrée du laboratoire. Les blocs brûleurs de l'invention permettent d'avoir des vitesses d'air de l'ordre de 20 m/s au maximum, au lieu des 50 à 100 m/s rencontrés avec les brûleurs classiques. Ces vitesses plus faibles se traduisent par moins de volage et une meilleure tenue de la superstructure;

— meilleur calorifugeage possible en raison d'une surface calorifugeable accrue des piédroits, les ouvreaux de l'invention ayant une hauteur plus faible que les ouvreaux classiques.

La description qui va suivre en regard des dessins annexés, donnés à titre d'exemple non limitatif, fera bien comprendre comment l'invention peut être réalisée, les particularités qui ressortent tant du dessin que du texte faisant bien entendu partie de ladite invention.

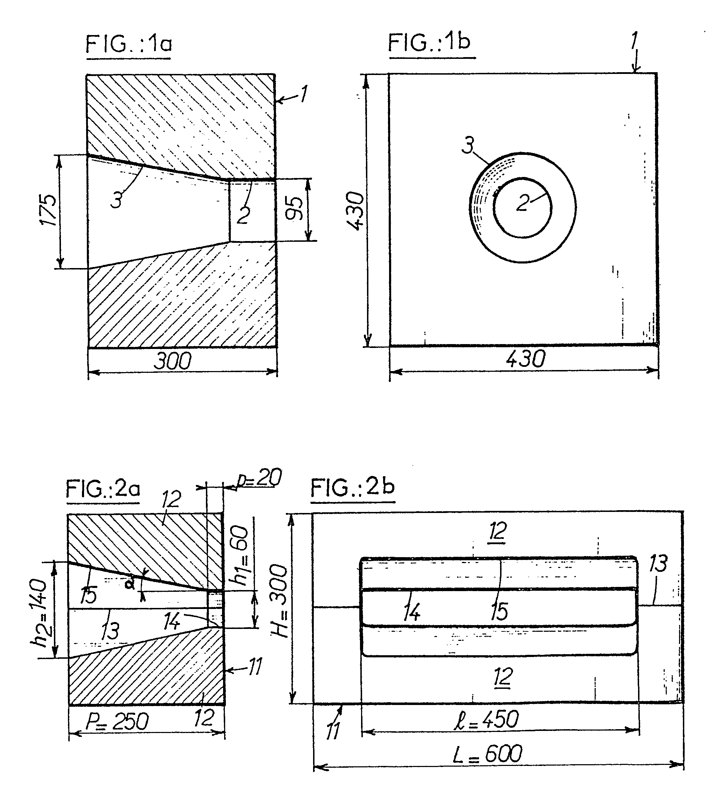

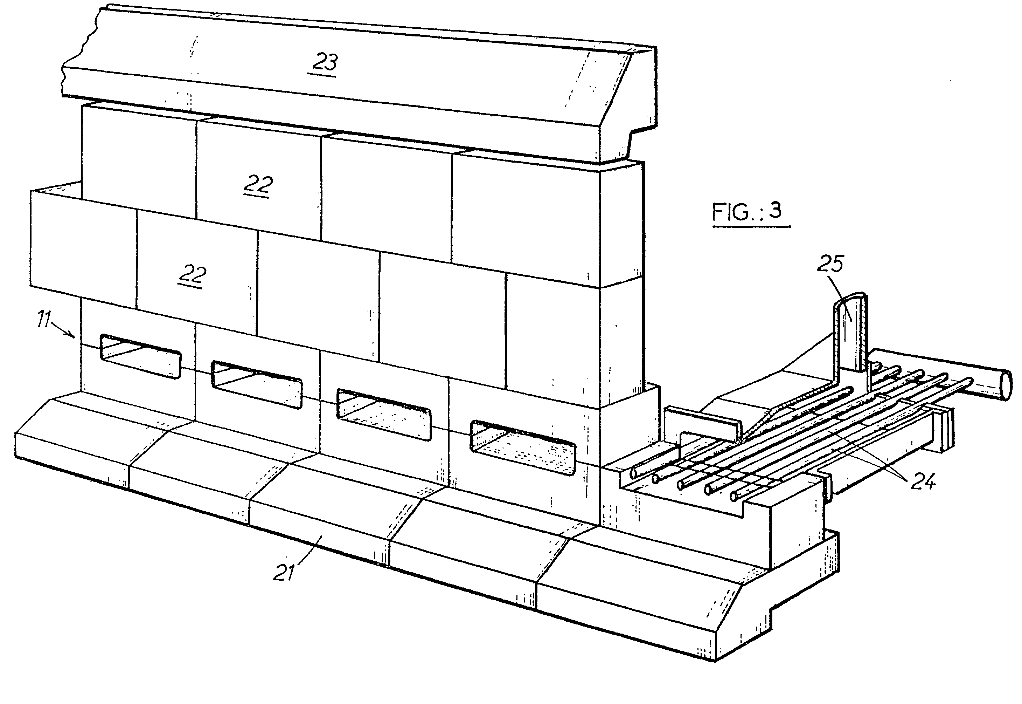

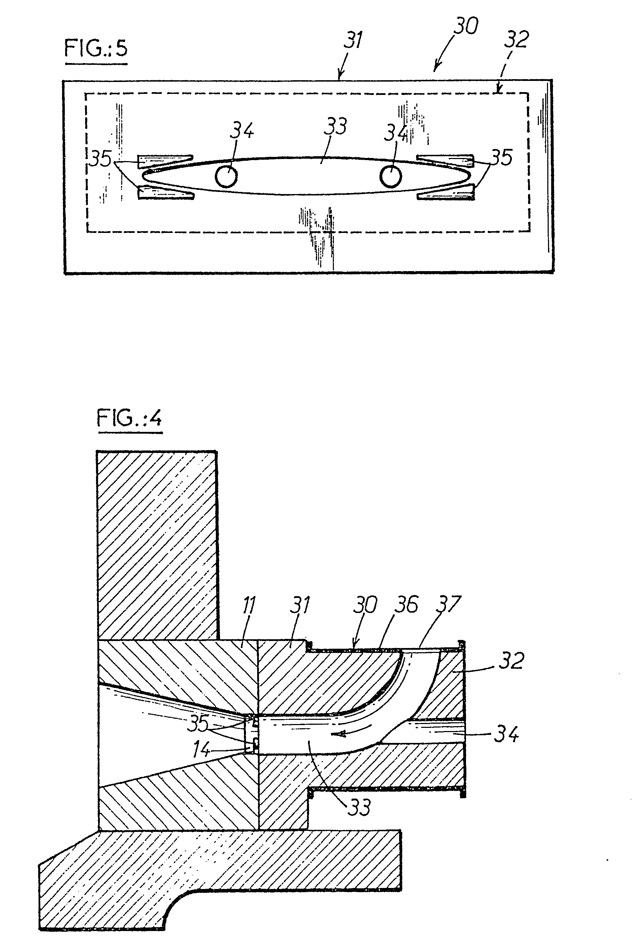

Les fig. 1a et 1b sont des vues en élévation et en coupe transversale d'un ouvreau classique. Les fig. 2a et 2b sont des vues en élévation et en coupe transversale d'un ouvreau selon l'invention. La fig. 3 représente schématiquement et partiellement, en perspective avec arrachement partiel, la superstructure d'un des piédroits d'un four à récupérateur selon l'invention, équipé d'ouvreaux tels que l'ouvreau des fig. 2. La fig. 4 est une vue partielle en coupe d'un mode de réalisation de la superstructure d'un piédroit de four selon l'invention, dans laquelle un bloc intermédiaire est prévu entre les ouvreaux et les conduits d'amenée d'air et d'injection de combustible. La fig. 5 est une vue en élévation de la face antérieure du bloc intermédiaire de la fig. 4.

Sur les fig. 1a et 1b est illustré un ouvreau classique typique. Cet ouvreau 1 présente des faces antérieure et postérieure carrées et une ouverture intérieure comprenant, de l'arrière vers l'avant, une première portion cylindrique 2 et une deuxième portion tronconique 3. L'ouvreau est généralement constitué d'un bloc réfractaire monolithique moulé. L'ouvreau a typiquement une longueur et une hauteur de 430 mm et une profondeur de 300 mm. Le diamètre de la première portion de l'ouverture est typiquement de 95 mm tandis que le diamètre maximal de la deuxième portion est de 175 mm.

Sur les fig. 2a et 2b est représenté un ouvreau selon l'invention. Cet ouvreau 11 est formé de deux demi-pièces moulées 12 en matière réfractaire, de forme identique, disposées face à face avec un joint horizontal 13. L'ouvreau résultant a la forme d'un parallélépipède rectangle et est pourvu d'une ouverture de forme générale rectangulaire allongée, constituée, de l'arrière vers l'avant, par une première portion 14 de section transversale constante et par une deuxième portion 15 allant en s'évasant vers le haut et le bas selon un angle d'évasement $\alpha$ de 10°. Les angles de l'ouverture sont de préférence arrondis, comme représenté. Typiquement, les dimensions de cet ouvreau sont les suivantes: longueur totale L: 600 mm, hauteur H: 300 mm, profondeur P: 250 mm. Longueur I de l'ouverture: 450 mm (soit 0,75 fois la longueur totale de l'ouvreau), hauteur $h_1$ de la première portion: 60 mm, et hauteur $h_2$ de la deuxième portion au niveau de la face antérieure: 140 mm environ, ce qui correspond à un rapport longueur/hauteur de 3,2 environ. La première portion s'étend sur une profondeur p de 20 mm et sa présence est nécessaire pour le raccordement du caisson métallique (non représenté) d'arrivée des fluides.

Si l'on voulait accroître la hauteur de l'ouverture rectangulaire, cela pourrait être très facilement obtenu en intercalant une pièce d'espacement ou potelet entre les deux demi-pièces 12.

La fig. 3 montre schématiquement et partiellement la superstructure d'un des piédroits d'un four à récupérateur selon l'invention, construite à l'aide d'ouvreaux semblables à celui des fig. 2a et 2b.

Cette superstructure comprend à sa base une rangée de blocs à nez 21 sur laquelle reposent, de façon contiguë, les ouvreaux perfectionnés 11 de l'invention, puis, par exemple, deux rangées de blocs réfractaires 22 (on peut, selon les besoins, prévoir une ou plusieurs rangées de blocs 22). Au-dessus de la dernière rangée de ces blocs, on trouve le sommier 23 supportant la voûte du four (non représentée), ce sommier 23 étant lui-même porté, de façon habituelle, par un armaturage métallique (non représenté). A la droite de la figure, on a omis la demi-pièce supérieure 12 de l'ouvreau et les blocs réfractaires la surmontant afin de montrer le brûleur proprement dit. Ce brûleur est formé d'injecteurs de combustible 24 débouchant dans l'ouverture de chaque ouvreau et d'une arrivée 25 d'air de combustion, semblables à ceux des fours à récupérateur classiques. Les injecteurs 24 ont été représentés de façon schématique pour des raisons de simplicité de représentation.

Un four typique selon l'invention, dont la distance entre les brûleurs extrêmes est égale à 7,20 m, comprend 12 ouvreaux (seuls 5 d'entre eux sont illustrés sur la fig. 3) et présente une longueur linéaire de brûleurs de 12×0,45=5,40 m. Cela correspond à un pourcentage de couverture de flamme en racine de $\frac{5,4}{7,2}$=75%.

Au contraire, un four classique ayant une distance entre brûleurs extrêmes similaire au précédent comprenant 12 ouvreaux classiques présente une longueur de couverture de flamme en racine de 12×0,17=2,10 m. Il est à noter que dans les fours classiques les ouvreaux successifs ne sont pas contigus mais séparés par des blocs réfractaires intermédiaires. Cela correspond à un pourcentage de couverture de flamme en racine de 29%, soit presque trois fois moins que dans le cas du four de l'invention.

Egalement, le four de l'invention présente une plus grande surface de piédroit à calorifuger. Les ouvreaux de l'invention font 300 mm de hauteur contre 430 mm pour les ouvreaux classiques. Comme il n'est pas possible, dans l'un et l'autre four, de calorifuger entre les brûleurs, le gain net est égal à la différence entre les hauteurs, soit (430−300), multipliée par la distance entre les brûleurs extrêmes. Ce gain de surface calorifugeable est estimé à environ 25% de la surface totale de piédroit, ce qui est loin d'être négligeable.

Les fig. 4 et 5 illustrent une variante de réalisation selon l'invention dans laquelle un bloc intermédiaire 30 formé à partir d'une composition réfractaire moulable est disposé entre les ouvreaux 11 selon l'invention et les conduits ou coquilles métalliques d'arrivée d'air et d'injection de combustible (non représentés).

Ce bloc est réalisé par moulage d'une composition réfractaire correspondant au produit C du Tableau 2 de la demande de brevet européen N° 0021936 et frittage de cette composition.

Ce bloc 30 présente, à sa partie antérieure 31, des dimensions semblables à celles de l'ouvreau adjacent et, à sa partie postérieure 32, des dimensions moindres, comme l'illustre bien la fig. 5 sur laquelle on a figuré en traits discontinus le contour de la face postérieure du bloc 30. Cela permet, d'une part, l'allégement de la pièce et, d'autre part, une mise en place plus aisée. Chaque bloc 30 comprend un conduit 33 d'arrivée d'air de section transversale elliptique et deux conduits 34 d'injection du combustible (gaz par exemple). Les conduits 34 débouchent dans le conduit 33, comme représenté. Sur la face antérieure de chaque bloc 30 sont prévues, venant de moulage, quatre saillies 35 en forme générale de triangle rectangle. Ces saillies encadrent la sortie elliptique du conduit 33 et sont espacées de façon telle qu'elles viennent juste s'encastrer dans la portion 14 des ouvreaux 11. Autour de la partie postérieure 32 du bloc, une chemise métallique 36, par exemple en acier, est prévue. Cette chemise est pourvue d'une ouverture elliptique 37 à l'emplacement de l'entrée du conduit 33. La chemise métallique sert à protéger la partie postérieure du bloc et permet aussi de raccorder le conduit d'arrivée d'air par soudure.

## Revendications

1. Four à brûleurs transversaux à récupérateur, comportant deux rangées d'ouvreaux (11) de brûleurs, caractérisé en ce que chaque ouvreau a une ouverture intérieure, de forme générale rectangulaire allongée, présentant une première portion (14) de section transversale rectangulaire constante s'étendant à partir de la face postérieure de l'ouvreau, et une deuxième portion (15) dont la face supérieure va en s'évasant vers le haut et la face inférieure va en s'évasant vers le bas jusqu'à la face antérieure de l'ouvreau, cette deuxième portion présentant un angle d'évasement (α) au plus égal à 15°, et en ce que la longueur totale cumulée des ouvertures d'une rangée représente au moins 0,65 fois la longueur de cette rangée.

2. Four selon la revendication 1, caractérisé en ce que chaque ouvreau est formé de deux demi-pièces (12) identiques en matière réfractaire, l'une constituant la lèvre inférieure et l'autre la lèvre supérieure et séparées par un joint horizontal.

3. Four selon l'une des revendications 1 ou 2, caractérisé en ce que l'ouverture présente une section transversale rectangulaire allongée telle que le rapport longueur/hauteur de cette ouverture au niveau de la face antérieure soit égal à au moins 2,5.

4. Four selon l'une quelconque des revendications 1 à 3, caractérisé en ce que la longueur totale cumulée des ouvertures des ouvreaux d'une rangée représente au moins 0,7 fois la distance entre les longueurs de cette rangée.

5. Four selon l'une quelconque des revendications 1 à 4, caractérisé en ce que la première portion de l'ouverture s'étend sur une distance n'excédant pas 0,2 fois la profondeur totale de l'ouvreau.

6. Four selon la revendication 5, caractérisé en ce que ladite première portion s'étend sur une distance n'excédant pas 0,1 fois la profondeur totale de l'ouvreau.

7. Four selon l'une quelconque des revendications 1 à 6, caractérisé en ce qu'il est prévu, en outre, un bloc intermédiaire (30) en matière réfractaire moulée, pourvu de canaux internes (33, 34) raccordables, respectivement, aux conduits d'arrivée d'air et d'injection de combustible et confluant en un canal (33) raccordable à l'ouverture débouchant sur la face postérieure de l'ouvreau.

8. Four selon la revendication 7, caractérisé en ce que le bloc intermédiaire est pourvu d'une chemise métallique (36) sur une partie au moins de ses faces supérieure, latérales et inférieure.

9. Four selon l'une des revendications 7 ou 8, caractérisé en ce que le canal interne raccordable aux conduits d'arrivée d'air et le canal interne raccordable à l'ouverture de la face postérieure de l'ouvreau se trouvent dans le prolongement l'un de l'autre et ont une section elliptique.

## Patentansprüche

1. Ofen mit Rekuperativquerbrennern, der zwei Reihen aus Brennerblöcken (11) aufweist, dadurch gekennzeichnet, dass jeder Brennerblock ein inneres Fenster aufweist, das im wesentlichen die Form eines länglichen Rechteckes hat, wobei das Fenster einen ersten Abschnitt (14) von konstantem rechteckigem Querschnitt, der sich ausgehend von der hinteren Fläche des Brennerblokkes erstreckt und einen zweiten Abschnitt (15) aufweist, dessen obere Begrenzungsfläche sich nach oben und dessen untere Begrenzungsfläche sich nach unten bis zur vorderen Fläche des Brennerblockes hin erweitert und dieser zweite Abschnitt einen Erweiterungswinkel (α) von höchstens 15° aufweist und dass die Gesamtlänge, die sich aus der Summe der Längen der Fenster einer Reihe ergibt, wenigstens das 0,65-fache der Länge dieser Reihe beträgt.

2. Ofen nach Anspruch 1, dadurch gekennzeichnet, dass jeder Brennerblock aus zwei gleichen Hälften (12) aus feuerfestem Material besteht, die an einer horizontalen Fuge zusammenstossen, wobei eine Hälfte die untere Lippe und die andere Hälfte die obere Lippe des Fensters bildet.

3. Ofen nach einem der Ansprüche 1 oder 2, dadurch gekennzeichnet, dass das Fenster einen länglichen rechteckigen Querschnitt derart aufweist, dass das Verhältnis Länge/Höhe des Fensters an der vorderen Fläche mindestens 2,5 ist.

4. Ofen nach einem der Ansprüche 1 bis 3, dadurch gekennzeichnet, dass die Gesamtlänge, die sich aus der Summe der Längen der Fenster der Brennerblöcke einer Reihe ergibt mindestens das 0,7-fache der Länge dieser Reihe beträgt.

5. Ofen nach einem der Ansprüche 1 bis 4, dadurch gekennzeichnet, dass sich der erste Abschnitt des Fensters über eine Länge erstreckt, die höchstens das 0,2-fache der Gesamtdicke des Brennerblockes beträgt.

6. Ofen nach Anspruch 5, dadurch gekennzeichnet, dass sich der genannte erste Abschnitt über eine Länge erstreckt, die höchstens das 0,1-fache der gesamtdicke des Brennerblockes beträgt.

7. Ofen nach einem der Ansprüche 1 bis 6, dadurch gekennzeichnet, dass er ausserdem einen Zwischenblock (30) aus gegossenem feuerfestem Material aufweist, der innere Kanäle (33, 34) enthält, die an Luftzuführleitungen bzw. an Brennstoff-Zuführleitungen anschliessbar sind und die an einem Kanal (33) miteinander kommunizieren, der an der hinteren Fläche des Brennerblockes an das Fenster im Brennerblock angeschlossen ist.

8. Ofen nach Anspruch 7, dadurch gekennzeichnet, dass der Zwischenblock eine metallische Hülle (36) aufweist, die mindestens einen Teil seiner oberen, seitlichen und unteren Fläche bedeckt.

9. Ofen nach einem der Ansprüche 7 oder 8, dadurch gekennzeichnet, dass der innere Kanal, der an Luftzuführleitungen anschliessbar ist und der innere Kanal, der an die Fenstermündung an der hinteren Fläche des Brennerblockes anschliessbar ist, in der Verlängerung des jeweils anderen liegen und einen elliptischen Querschnitt haben.

## Claims

1. Transverse-burner recuperative furnace comprising two rows of burner blocks (11), characterized in that each burner block has an inner aperture of general elongate rectangular shape, which presents a first portion (14) of constant rectangular cross-section extending from the rear face of the burner block, and a second portion (15) the upper face of which flares upwardly and the lower face flares downwardly to the front face of the burner block, this second portion having an angle of flare ($\alpha$) at most equal to 15°, and in that the cumulated total length of the apertures of a row represents at least 0.65 times the length of this row.

2. Furnace as claimed in claim 1, characterized in that each burner block is formed by two identical half-pieces (12) of refractory material, the one forming the lower lip and the other the upper lip, and separated by a horizontal joint.

3. Furnace as claimed in any of claims 1 or 2, characterized in that the aperture exhibits an elongate rectangular cross-section such that the length/height ratio of this aperture, at the level of the front face, is equal to at least 2.5.

4. Furnace as claimed in any of claims 1 to 3, characterized in that the cumulated total length of the apertures of the burner blocks of a row represents at least 0.7 times the length of this row.

5. Furnace as claimed in any of claims 1 to 4, characterized in that the first portion of the aperture extends over a distance not exceeding 0.2 times the total depth of the burner block.

6. Furnace as claimed in claim 5, characterized in that said first portion extends over a distance not exceeding 0.1 times the total depth of the burner block.

7. Furnace as claimed in any of claims 1 to 6, characterized in that it is further provided an intermediate block (30) of molded refractory material, provided with internal ducts (33,34) connectable, respectively, to the air inlet and fuel injection pipes and converging into a duct (33) connectable to the aperture leading to the rear face of the burner block.

8. Furnace as claimed in claim 7, characterized in that the intermediate block is provided with a metallic jacket (36) on at least a part of its upper, lateral and lower faces.

9. Furnace as claimed in any of claims 7 or 8, characterized in that the internal duct connectable to the air inlet pipes and the internal duct connectable to the aperture of the rear face of the burner block are in mutual extension and have an elliptical cross-section.

FIG.:1a

FIG.:1b

FIG.:2a

FIG.:2b

FIG.: 3

0 091 344

FIG.:5

FIG.:4